# EUROPÄISCHE PATENTANMELDUNG

(11) **EP 2 177 686 A2**
(43) Veröffentlichungstag der Anmeldung: **21.04.2010**
(21) Anmeldenummer: 09012784.6
(22) Anmeldetag: 09.10.2009
(51) Int. Cl.: E04D 13/147

(54) **Plastisch verformbare materialbahn**

(30) Priorität: 15.10.2008 DE 202008013677 U
(71) Anmelder: Röttger, Wilhelm, 36103 Flieden (DE)
(72) Erfinder: Röttger, Wilhelm, Dipl.-Ing., 36103 Flieden (DE); Röttger, Lars, 36103 Flieden (DE)

(57) **Zusammenfassung**

Die Erfindung betrifft eine plastisch verformbare Materialbahn (1) mit einem dehnbaren Trägerelement (2), das als Feinstwelle ausgebildet ist und dessen Wellentäler mit plastisch verformbarem Dichtmaterial (3,4) vollständig ausgefüllt sind. Bei Dehnung in Wellenrichtung (X) verringert sich die Gesamtstärke (H) der Materialbahn, die ebenen Oberflächen (7, 8) bleiben im wesentlichen erhalten.

## Beschreibung

Plastisch verformbare Materialbahn

Die Erfindung betrifft eine plastisch verformbare Materialbahn mit einem dehnbaren Trägerelement vorzugsweise zur Anwendung im Außenbereich von Bauwerken, wobei das Trägerelement gleichmäßige Wellen aufweist und die Wellentäler mit einer plastisch verformbaren Abdeckschicht ausgefüllt sind,

Im Stand der Technik sind Materialbahnen bekannt, die beispielsweise unter dem Begriff "Blei-Ersatz" im Dachbereich angewendet werden. Sie haben die Aufgabe, Problemzonen wetterbeständig abzudichten, wie das beispielsweise bei Kamineinfassungen und Dachfensterschürzen der Fall ist. Um diese Funktion gut zu erfüllen, muss sich die Materialbahn leicht und gut dichtend an die jeweilige Dachkontur anformen lassen und soll vor allem den extremen Belastungen auf dem Dach standhalten.

Gängige Typen weisen deshalb eine plastisch verformbare Struktur in Form eines Streckgitters aus weichem Aluminium auf, das mit dem eigentlichen Dichtmaterial ummantelt ist. Entweder wird das Streckgitter mit der Dichtmasse beschichtet oder durch Aufwalzen mit der Dichtbahn verbunden.

Ein solches Bahnmaterial ist aus der DE 36 42 063 C2 bekannt. Dabei handelt es sich um von Hand verformbares in zumindest einer Richtung streckbares Abdeckmaterial mit einem Streckgitter als Trägerelement, welches mit einer nicht klebenden dehnfähigen Substratfolie aus PIB beschichtet ist. Die PIB-Bahn erfordert eine relativ aufwändige Herstellung, wie beispielsweise den Einsatz eines Mischers, Kneters und Kalanders, und ein relativ kräftiges und damit teures Streckgitter. Auf der Unterseite ist eine klebefähige Substratbahn ebenfalls aus PIB vorgesehen. Materialbahnen, die zur Abdichtung vorgesehen sind, haben im allgemeinen eine unterseitige Klebeschicht. Diese Klebemassen enthalten Weichmacher, die in die benachbarten Bahnen diffundieren und diese schädigen können, sodass hierbei nur ähnliche Materialien kommbiniert werden können. Z.B. würde eine Oberflächenbeschichtung mit einer preiswerteren Acrylatdispersion nach kurzer Zeit Risse aufweisen.

Ein weiteres Bahnmaterial ist aus DE 195 23 834 A1 bekannt. Dabei handelt es sich ebenfalls um ein Streckgitter als Trägerelement mit einer wasserdichten Kunststoffhaut und einer Vliesbeschichtung, wobei diese Schichten insgesamt entgegen der Streckrichtung gestaucht sind, um eine spätere Dehnung zu ermöglichen. Die Oberfläche dieses Bahnmaterials ist wegen der Stauchung äußerst zerklüftet und nicht für

überlappende Anwendungen geeignet, bei denen zwei oder mehr Bahnen durch Verkleben miteinander verbunden werden sollen.

Des weiteren ist ein streckbares Bahnmaterial aus DE 102 30 552 A1 bekannt. Hierbei wird eine dünne Metallfolie mit einem reissfesten Vlies oder Gewebe beschichtet und anschliessend durch Kreppen quer zur beabsichtigten Streckrichtung mit kleinen Falten versehen. Hierdurch entsteht ebenfalls eine zerklüftete Oberfläche, die das Verkleben von mehreren Bahnen erschwert und aufgrund der Kapillarwirkung besondere Massnahmen bei Abdichtungen erforderlich macht. Ausserdem benötigt der Kreppvorgang mehr Material als für die vorgesehene Streckung mindestens erforderlich wäre, da wegen der unregelmässigen Oberflächenausbildung ein gewisser Überschuss vorhanden sein muss.

Blei ist ein duktiles Material, d.h. es dehnt sich bei Zugbelastung irreversibel unter Verringerung des Querschnitts. Diese Duktilität wird bei den zuvor beschriebenen Bahnmaterialien, die Aluminium-Streckgitter als Trägermaterial verwenden, durch eine geometrische Verformung des Gitters ersetzt. Die Stege der Streckgitter müssen demzufolge relativ dick sein, um den Rückstellkräften der übrigen Schichten zu widerstehen, die nicht metallisch sondern im allgemeinen thermoplastisch oder auch duroplastisch sind.

Gekreppte Alufolien ermöglichen große Dehnungen bei geringen Zugkräften, was neben der guten Verformbarkeit aber auch den Nachteil hat, dass eine so genannte Mikrofalte von etwa 0,1 mm auf 1 - 2 mm d.h. bis auf das 10- oder 20- fache gedehnt werden kann. Solche extremen örtlichen Dehnungen können nicht gleichmäßig auf die benachbarten Schichten übertragen werden, sondern es können unter der Folie Ablösungen oder Risse entstehen, die zu unerwünschten Kapillareffekten führen.

Weiterhin ist es aus WO96/06245 und aus DE 44 04 150 C1 bekannt, Folien so zu schlitzen, dass große Dehnungen durch eine streckgitterähnliche Verformung möglich werden. Hierdurch entstehen ebenfalls sehr große örtliche Dehnungen. Wenn z.B. ein dünnes Aluminiumblech mit 10 mm langen und nur 0,1 mm breiten Schlitzen mit einer Klebeschicht aus Butylkautschuk, die 1 mm dick ist, um 30 % gedehnt wird, was die übliche Dehnung bei Anformungen von solchen Folien an die Dachkontur ist, wird der Schlitz auf ca. 3 mm gedehnt und die Klebeschicht aus Butylkautschuk würde örtlich theoretisch um 3000% gedehnt und reduziert sich erfahrungsgemäß in der Praxis

auf etwa 0,3 mm. Dies ist naturgemäß ein sehr geringer Wert für ein starkbeanspruchtes Dachprodukt, sodass die untere Klebeschicht aus Sicherheitsgründen von vorne herein auf mindestens 1,5 mm ausgelegt werden muss. Zusätzlich sind diese ausgedünnten Stellen ohne Folienabdeckung der Bewitterung ausgesetzt, was die Kosten weiter erhöht, weil das Material insgesamt uv-beständig sein muss.

Von MAGE Herzberg GmbH aus DE 04916 Herzberg wird ein "Flex-Alu" genanntes Abdichtband angeboten, das aus einem etwa 0,2 mm dicken lackierten Aluminiumblech besteht, das quer zur Streckrichtung im Abstand von etwa 6 mm ca. 3 mm tiefe Wellen aufweist. Das gewellte Blech hat auf der Unterseite zusätzlich eine glatt durchlaufende Klebeschicht aus Butylkautschuk von ca. 1 mm Dicke sowie eine Trennfolie. Es ist einleuchtend, dass die durch die 3 mm hohen und 6 mm langen Wellen gebildeten Wellentäler bei Überlappungen auch bei sorgfältiger Verlegung des Abdichtbandes nicht durch eine 1 mm dicke Butylschicht abgedichtet werden können. Eine ähnliche Anordnung beschreibt DE 199 14 071 U1. Hier wird vorgeschlagen, dass die Unterseite des gewellten Alublechs vollständig mit Butylkautschuk ausgefüllt wird und noch ein geringer Kleberüberschuss die unteren Scheitellinien des gewellten Blechs bedeckt, sodass eine geschlossene Klebefläche unabhängig von der Höhe der Profilierung erzeugt wird. Die Höhe der Überdeckung der unteren Scheitellinien ist jedoch offensichtlich nicht ausreichend, um eine dichte Verbindung zu garantieren, wenn eine solche schwach überdeckte Scheitellinie auf einem Wellental eines darunter liegenden zweiten Dichtbandes aufliegt und angepresst wird, zumal die Wellenhöhe hierbei relativ hoch ist.

Weiter ist in WO 95/31620 ein Dichtmaterial beschrieben, das ein flachgewalztes Streckgitter als Trägerelement einer Sandwich-Struktur aufweist, welche insgesamt wellenförmig verformt ist, um Dehnungen in jeder Richtung zu ermöglichen. Hierbei ist die Wellenhöhe ein Vielfaches der Sandwichdicke, also wahrscheinlich über 10 mm, was eine sichere Verlegung schwierig erscheinen lässt.

Aufgabe der vorliegenden Erfindung ist es, eine quasi-homogene Materialbahn mit einer gleichmäßigen Wandstärke von etwa 0,5 mm bis 1,5 mm Stärke und geschlossenen Oberflächen zur Verfügung zu stellen, die sich von Hand ohne wesentliche Rückstellkräfte ähnlich einer dünnen Blei- oder Goldfolie dehnen lässt.

Der Grundgedanke ist dabei, unter Verzicht auf Streckgitter oder geschlitzte Bleche als streckbare Metalleinlage eine durchgehend gewellte Metallfolie einzusetzen, deren Wellenhöhe so gering ist, dass die Wellentäler beidseitig vollständig mit Dichtmaterial ausgefüllt werden können, ohne dass die Gesamtstärke der Materialbahn zu groß und damit das Produkt unhandlich und unwirtschaftlich wird.

Erfindungsgemäß wird vorzugsweise eine Aluminiumfolie von 0,10 mm Dicke mit ca. 0,6 mm hohen und 1,5 mm langen Wellen versehen, sodass sie eine Gesamthöhe von etwa 0,7 mm aufweist. Diese Wellenform entspricht in etwa der "Feinstwelle" bei der Wellpappenherstellung. Bei Verwendung einer Aluminiumfolie unter 0,1 mm ist auch eine noch kleinere Wellenform unter 0,3 mm Wellenhöhe und 0,8 mm Wellenlänge denkbar. Hiermit können insgesamt sehr dünne Materialbahnen von nur 0,5 mm Dicke hergestellt werden. Ein Verhältnis von Materialstärke zu Wellenhöhe 1:5 ist hierbei unkritisch. Die mögliche Dehnung ist dabei grundsätzlich sehr groß, im allgemeinen ist allerdings eine maximale Dehnfähigkeit von 50 % ausreichend.

Für eine Materialbahn, die auf dem Dach eingesetzt werden soll, werden die Wellentäler auf der Oberseite vorzugsweise mit einem plastisch dehnbaren eingefärbten Dichtmaterial wie PUR-Dichtstoff ausgefüllt, der die Wellenberge noch um mindestens 0,1 mm überdeckt, und auf der Unterseite mit einem weichelastischen Kleber wie Butylkautschuk mit einer Silikonschutzfolie, welcher die unteren "Wellenberge" um etwa 0,3 mm überdeckt, sodass eine insgesamt 1,0 bis 1,2 mm dicke, geschlossene Materialbahn entsteht.

Dieser Aufbau ermöglicht es, die einzelnen Schichten getrennt voneinander je nach Einsatzzweck und gewünschten Eigenschaften zu optimieren. So kann die obere Deckschicht aus einer Vielzahl von Dichtmassen gebildet werden wie z.B. Acryldispersion, Silikonkautschuk oder Schmelzkleber. Wenn für die farbliche Anpassung oder verbesserte Witterungsbeständigkeit eine weitere dünne Folie oder ein Lack aufgebracht wird oder wenn keine Witterungsbeständigkeit gefordert wird, kann die obere Deckschicht aus relativ preiswertem Material mit hohem Füllstoffanteil bestehen wie PUR-Schaum oder Wachs.

Die untere Deckschicht ist vorzugsweise eine Kautschukklebemasse, es können jedoch auch Acrylkleber, Haftschmelzkleber, Bitumen oder spezielle reaktivierbare Klebesysteme verwendet werden. Wie auf der Oberseite ist es auch hier denkbar, die Wellentäler mit einem preiswerten nichtklebenden Material zu füllen und eine dünne Klebefolie, eventuell auch nur an den Rändern, darunter anzubringen. Ebenso kann ein Schmelzkleber eingesetzt werden, der mit Heißluft vor Ort verklebt werden kann. Zur besseren Haftung von niedrigviskosen Klebemassen wie z.B. Polymerbitumen ist vorgesehen, eine Schaumfolie auf die Unterseite der Tragschicht zu kaschieren.

Die Tragschicht kann eine Folie von 20 µm bis 200 µm aus Aluminium, Kupfer, Blei oder einem anderen Metall sein. Die erforderliche Steifigkeit dieser Folie bemisst sich nach der Plastizität bzw. dem Rückstellvermögen der oberen und unteren Deckschichten. Sofern diese Materialien weich und leicht plastisch verformbar sind, kann die Tragschicht ebenfalls leicht und dünn sein. Z.B. kann eine 25 µm dicke typische Aluminium-Hausaltsfolie ausreichend sein für ein Korrosionsschutzband zur dampfdichten Umwickelung von Pipelines einschließlich Flanschen und Krümmungen.

Um die Reißfestigkeit einer Folie zu erhöhen, die ansonsten alle Funktionen erfüllen würde, kann dieselbe auch mit einer Kunststoff-Folie, einem Kunststoff-Vlies oder anderen organischen Fasern verstärkt werden. Grundsätzlich kann die Tragschicht auch aus einer nichtmetallischen, notfalls bedampften Folie wie z.B. Polyester oder Acrylat bestehen, um beispielsweise als Dampfsperre zu dienen.

Selbst ein Vlies oder Gewebe ist als Tragschicht denkbar, wenn die Deckschichten keine Rückstellkräfte erzeugen und in ihrem gedehnten Zustand ohne Stützkräfte verharren oder wenn die Verklebung auf der Unterseite für eine ausreichende Fixierung sorgt. Es ist beispielsweise denkbar, ein PP-Vlies von 30 g/m² Flächengewicht als Tragschicht beiderseits mit Polymerbitumen auszufüllen.

Weiterhin ist es möglich, die gewellte Tragschicht quer zu den Wellen ganz oder teilweise mit versetzten Schlitzen zu versehen, sodass eine streckgitterförmige Dehnung quer zu der zuvor beschriebenen Streckrichtung möglich ist. In besonderen Fällen können aus dem Bahnmaterial auch Formteile wie z.B. Schürzen für Dachfenster hergestellt werden.

Weitere Einzelheiten und Merkmale der Erfindung sind nicht nur den Ansprüchen, sondern auch aus den nachstehenden Zeichnungen für sich und/oder in Kombination zu entnehmen.

Es zeigen:

Fig. 1 einen Längsschnitt durch die erfindungsgemäße Materialbahn in wesentlich vergrößerter Darstellung;

Fig.2 zeigt den Längsschnitt der gleichen Materialbahn in gestrecktem Zustand;

Fig. 3 zeigt die Materialbahn aus Fig. 1 mit einer zusätzlichen Oberflächenbeschichtung und einer zusätzlichen Klebeschicht auf der Unterseite einschließlich einer abziehbaren Schutzfolie.

Fig. 4 zeigt eine Ansicht der Materialbahn aus Fig. 1 mit teilweise entfernter oberer Deckschicht und versetzten Längsschlitzen quer zu den Wellentälern.

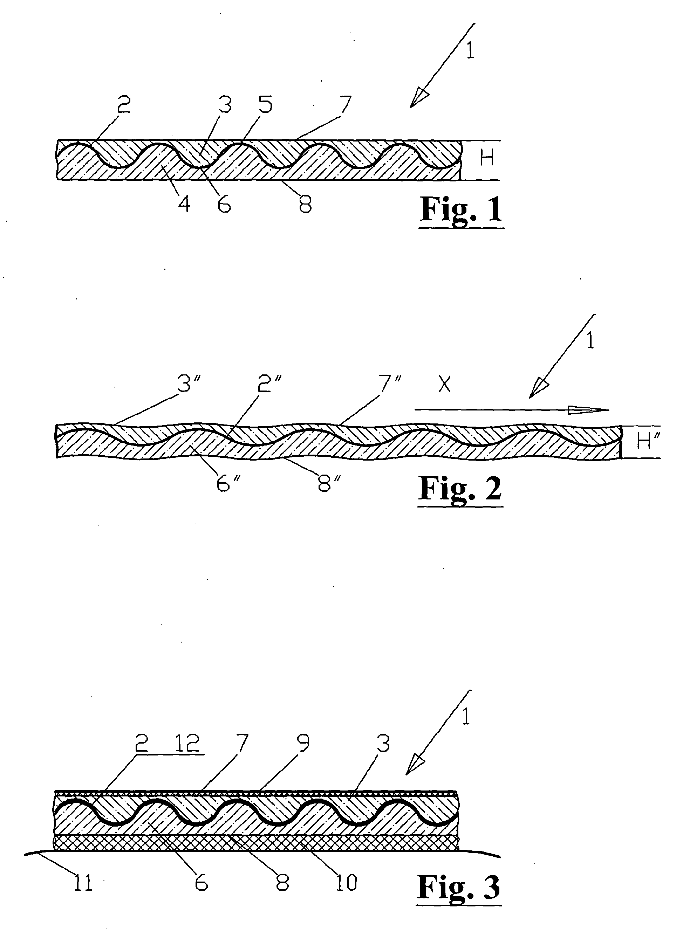

In Fig. 1 ist die erfindungsgemäße Materialbahn 1 in vergrößertem Längsschnitt dargestellt. Die erfindungsgemäße Materialbahn 1 weist ein dehnbares Trägerelement 2, eine obere Deckschicht 3 und eine untere Deckschicht 4 auf. Das dehnbare Trägerelement 2 ist eine gewellte Folie vorzugsweise aus 0,1 mm dickem Aluminium mit 0,6 mm Wellenhöhe.Die obere Deckschicht 3 ist ein handelsüblicher PUR-Dichtstoff, der das dehnbare Trägerelement 2 an den oberen Scheitelpunkten 5 mindestens 0,1 mm überdeckt. Die untere Deckschicht 4 besteht aus Butylkautschuk und überdeckt die unteren Scheitelpunkte 6 um etwa 0,3 mm. Die Gesamthöhe H der erfindungsgemäßen Materialbahn 1 liegt bei 1,0 bis 1,2 mm. Die Oberfläche 7 der oberen Deckschicht 3 und die Oberfläche 8 der unteren Deckschicht 4 sind eben und geschlossen.

Fig. 2 zeigt die Materialbahn 1" in einem um etwa 30 % in Wellenrichtung X gedehnten Zustand. Die Gesamthöhe H" ist entgegen der Dehnung um ca.30 % reduziert. Das dehnbare Trägerelement 2" ist nur noch schwach gewellt und die Oberfläche 7" der oberen Deckschicht 3" sowie die Oberfläche 8" der unteren Deckschicht 6" sind noch glatt aber minimal gewellt, sodass eine Verklebung der unteren Deckschicht 6" auf jedem beliebigen Untergrund problemlos möglich ist.

Fig. 3 zeigt die erfindungsgemäße Materialbahn 1 aus Fig. 1 . Auf die Oberfläche 7 der oberen Deckschicht 3 ist eine witterungsbeständige Folie 9 aufkaschiert und auf der unteren Deckschicht 8 ist ganz oder teilweise eine zusätzliche Klebefolie10 aufgetragen, die mit einer abziehbaren Schutzfolie 11 geschützt ist. Ausserdem ist die dehnbare Tragschicht 2 mit einer Beschichtung 12 versehen, die die Reissfestigkeit erhöht. Die Beschichtung 12 ist als hitzebeständiges PE-Vlies mit ca. 15 g/m² Flächengewicht ausgebildet.

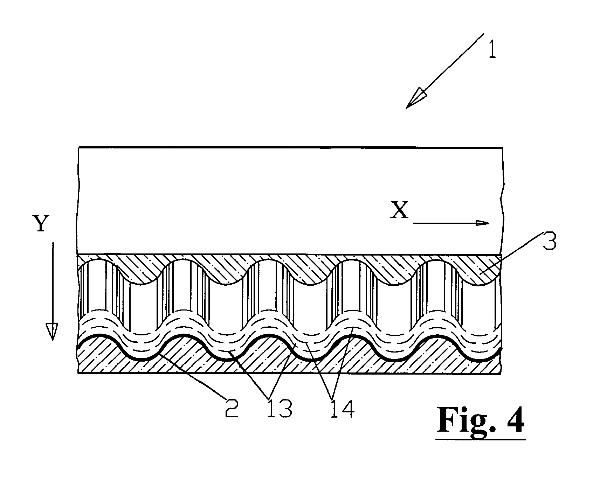

Fig. 4 zeigt die erfindungsgemäße Materialbahn 1 mit teilweise entfernter oberer Deckschicht 3 und einem dehnbaren Trägerelement 2 mit zusätzlichen gegeneinander versetzten Längsschlitzen 13 und 14 , die eine streckgitterähnliche Dehnung der Materialbahn 1 in diesem Bereich in Richtung Y quer zur Wellenrichtung X ermöglichen.

## Patentansprüche

1. Plastisch verformbare Materialbahn (1) mit einem dehnbaren Trägerelement (2) und geschlossenen Oberflächen (7, 8), **dadurch gekennzeichnet, dass** das dehnbare Trägerelement (2) als Feinstwelle mit Wellenlängen unter 2 mm ausgebildet ist und dass die Wellentäler mit einer plastisch verformbaren Abdeckschicht (3, 4) ausgefüllt sind.

2. Plastisch verformbare Materialbahn (1) nach Anspruch 1, **dadurch gekennzeichnet, dass** das dehnbare Trägerelement (2) aus einer Metallfolie besteht.

3. Plastisch verformbare Materialbahn (1) nach Anspruch 2, **dadurch gekennzeichnet, dass** das dehnbare Trägerelement (2) aus einer Aluminiumfolie besteht.

4. Plastisch verformbare Materialbahn (1) nach Anspruch 1, **dadurch gekennzeichnet, dass** das dehnbare Trägerelement (2) aus einer Kunstoff-Folie besteht.

5. Plastisch verformbare Materialbahn (1) nach Anspruch 1, **dadurch gekennzeichnet, dass** das dehnbare Trägerelement (2) aus einem Vlies besteht.

6. Plastisch verformbare Materialbahn (1) nach Anspruch 1 **dadurch gekennzeichnet, dass** das dehnbare Trägerelement (2) aus einem Gewebe besteht.

7. Plastisch verformbare Materialbahn (1) nach einem der Ansprüche 4 bis 6, **dadurch gekennzeichnet, dass** das dehnbare Trägerelement (2) eine Beschichtung (12) aufweist.

8. Plastisch verformbare Materialbahn (1) nach Anspruch 7, **dadurch gekennzeichnet, dass** das dehnbare Trägerelement (2) dampfdicht beschichtet ist.

9. Plastisch verformbare Materialbahn (1) nach Anspruch 2 oder 3, **dadurch gekennzeichnet, dass** das dehnbare Trägerelement (2) mit einer Beschichtung (12) aus Vlies verstärkt ist.

10. Plastisch verformbare Materialbahn (1) nach einem der vorhergehenden Ansprüche, **dadurch gekennzeichnet, dass** das dehnbare Trägerelement (2) ganz oder teilweise mit versetzten Längsschlitzen (13, 14) in Wellenrichtung (X) versehen ist.

11. Plastisch verformbare Materialbahn (1) nach einem der vorhergehenden Ansprüche, **dadurch gekennzeichnet, dass** das dehnbare Trägerelement (2) unterseitig mit einer Schaumfolie (12) beschichtet ist.
